# EUROPEAN PATENT SPECIFICATION

(11) **EP 2 374 539 B1**
(45) Date of publication and mention of the grant of the patent: **20.06.2012**
(21) Application number: 11151988.0
(22) Date of filing: 25.01.2011
(51) Int. Cl.: F01N 3/20, B01J 35/00, B01J 35/04, F01N 3/28, H05B 3/14, F01N 3/022

(54) **Electrically heated honeycomb structure**
Elektrisch beheizbare Wabenstruktur
Structure en nid d'abeilles à chauffage électrique

(30) Priority: 09.04.2010 WO PCT/JP2010/056482
(43) Date of publication of application: 12.10.2011
(73) Proprietor: Ibiden Co., Ltd., Ogaki-shi Gifu 503-8604 (JP)
(72) Inventor: Ido, Takahiko, Gifu 501-0695 (JP); Koga, Yoshihiro, Gifu 501-0695 (JP); Asanuma, Takumi, Gifu 501-0695 (JP); Ito, Takashi, Gifu 501-0695 (JP)
(74) Representative: HOFFMANN EITLE

(56) References cited:
- US-A- 3 982 100
- US-A- 5 655 211

## Description

### BACKGROUND OF THE INVENTION

### 1. Field of the Invention

The present invention relates to a honeycomb structure that treats exhaust gas.

### 2. Description of the Related Art

A large number of techniques have been developed in relation to conversion of automobile exhaust gas. With an increase in traffic, however, countermeasures taken against exhaust gas have hardly been satisfactory. Not only in Japan but also globally, is automobile emission control going to be further tightened.

In order to meet such control, a catalyst support capable of treating predetermined components contained in exhaust gas is used in exhaust gas systems. Further, a honeycomb structure is known as a member for such a catalyst support.

This honeycomb structure has, for example, multiple cells (through holes) extending from one to another of the end faces of the honeycomb structure along its longitudinal directions, and these cells are separated from each other by cell walls supporting a catalyst. Accordingly, in the case of causing exhaust gas to flow through this honeycomb structure, substances contained in the exhaust gas, such as HC (a hydrocarbon compound), CO (carbon monoxide), and NOx (nitrogen oxides), are converted (oxidized or reduced) by the catalyst supported by the cell walls, so that these components in the exhaust gas may be treated.

In general, the cell walls (base material) of such a honeycomb structure are formed of cordierite. Further, a catalyst support layer of γ-alumina is formed on the cell walls, and a catalyst of a noble metal such as platinum and/or rhodium is supported on this catalyst support layer.

Further, a technique has been proposed that, in order to improve conversion performance at exhaust gas temperatures lower than a temperature at which a catalyst becomes active, uses a honeycomb structure of a relatively low resistance and supplies the honeycomb structure with electric current via electrodes for voltage application provided on the honeycomb structure, thereby causing the honeycomb structure to perform self-heating Japanese Laid-Open Utility Model Application No. 49-124412 .

According to the conventional honeycomb structure described in Japanese Laid-Open Utility Model Application No. 49-124412, the honeycomb structure may be subjected to resistance heating by supplying the honeycomb structure with electric current via electrodes provided one at each end of the honeycomb structure. However, according to the conventional honeycomb structure described in Japanese Laid-Open Utility Model Application No. 49-124412, an extremely large potential is applied locally to the electrode portions from an external power supply. Therefore, abnormal heat generation may be caused to the electrode portions to degrade or damage the electrodes. Thus, the conventional honeycomb structure described in Japanese Laid-Open Utility Model Application No. 49-124412 has a problem in stability over a long period of time.

US 5,655,211 A discloses a honeycomb structure having features equivalent to those recited in the precharacterising portion of Claim 1 below.

### SUMMARY OF THE INVENTION

The present invention is made in view of such a problem, and has an object of providing a honeycomb structure less likely to suffer degradation of electrodes and usable with long-term stability.

According to the present invention, there is provided a honeycomb structure as recited in claim 1 below.

In embodiments of the present invention, the substance having the lower electrical resistivity may include at least one of a metal and a silicide.

Further, in embodiments of the present invention, the metal may be silicon.

Further, in embodiments of the present invention, the silicide may be nickel silicide.

Further, in embodiments of the present invention, the electrodes may be formed to surround peripheries of cross sections perpendicular to the longitudinal direction of the at least one honeycomb unit.

Further, in embodiments of the present invention, the at least one honeycomb unit may include an outer peripheral wall defining an outer periphery of the at least one honeycomb unit and an interior wall separating the through holes of the at least one honeycomb unit, the electrodes may be formed on the outer peripheral surface of the outer peripheral wall, the interior wall may be electrically connected to the outer peripheral wall having the electrodes formed thereon, and the pores in the interior wall may be filled with the substance having the lower electrical resistivity forming the at least one honeycomb unit.

Further, in embodiments of the present invention, a region where at least one of the outer peripheral wall and the interior wall of the at least one honeycomb unit filled with the substance having the lower electrical resistivity forming the at least one honeycomb unit may be wider than the electrodes in the longitudinal direction.

Further, in embodiments of the present invention, a resistance between the pair of electrodes may be 1 Ω to 10³ Ω in the at least one honeycomb units.

Further, in embodiments of the present invention, the honeycomb structure may be formed of the multiple honeycomb units bonded by interposing an adhesive layer.

Further, in embodiments of the present invention, the electrodes may be formed by one of spraying and sputtering.

Further, in embodiments of the present invention, a catalyst may be supported on the cell wall of the at least one honeycomb unit.

Further, in embodiments of the present invention, the catalyst may be one of platinum, rhodium, and palladium, and is supported on the cell wall by interposing an aluminum layer.

Further, in embodiments of the present invention, the at least one honeycomb unit may include silicon carbide as a principal component.

In embodiments of the present invention, it is possible to provide a honeycomb structure less likely to suffer degradation of electrodes and usable with long-term stability.

### BRIEF DESCRIPTION OF THE DRAWINGS

FIG. 1 is a perspective view typically illustrating a honeycomb structure of the present invention;
FIG. 2 is a plan view of an end face of the honeycomb structure illustrated in FIG. 1;
FIG. 3 is a perspective view typically illustrating another honeycomb structure of the present invention;
FIG. 4 is a perspective view typically illustrating a honeycomb unit of the honeycomb structure of FIG. 3; and
FIG. 5 is a plan view of end faces of the honeycomb unit of FIG. 4.

### DETAILED DESCRIPTION

A description is given, with reference to the drawings, of exemplary embodiments of the present invention.

### [First Configuration]

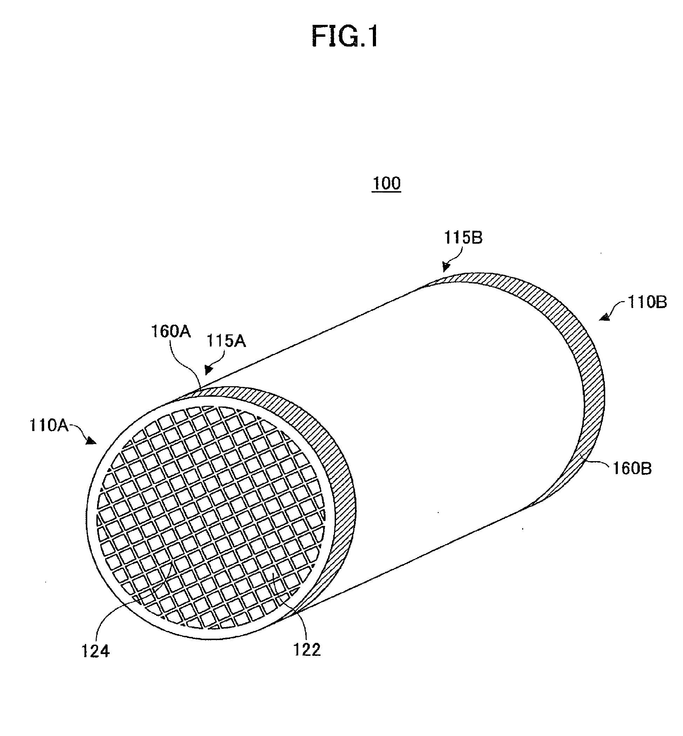

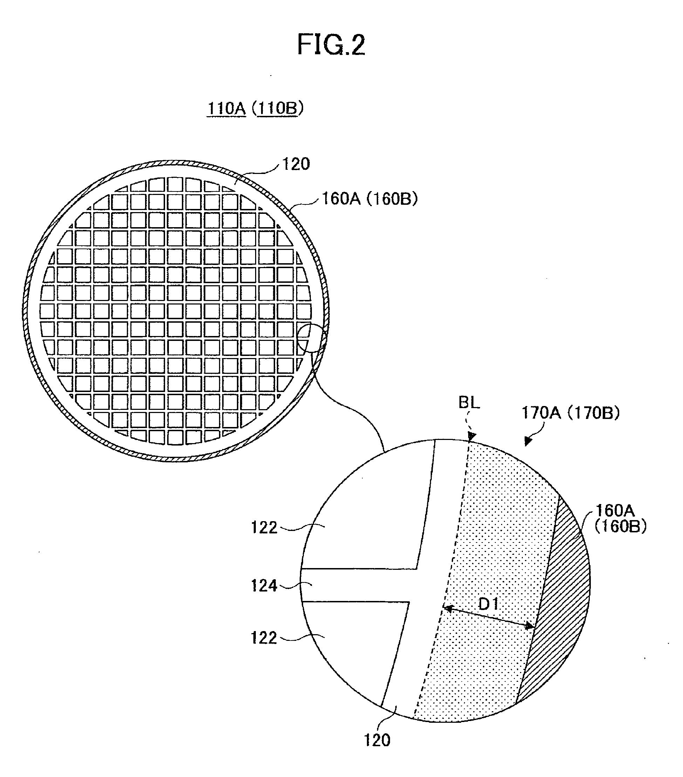

FIG. 1 typically illustrates a honeycomb structure 100 according to the present invention. Further, FIG. 2 is a plan view of an end face of the honeycomb structure 100 illustrated in FIG. 1.

As illustrated in FIG. 1, the honeycomb structure 100 according to the present invention is formed of a single honeycomb unit having two open end faces 110A and 110B. The honeycomb unit is a porous body. Further, the honeycomb structure 100 includes multiple cells (through holes) 122 and cell walls 124 defining the cells 122. The cells 122 extend from the end face 110A to the end face 1108 along the longitudinal directions of the honeycomb structure 100 to be open at the end faces 110A and 110B.

An electrode 160A and an electrode 160B are provided around portions extending from the end faces 110A and 110B, respectively, of the honeycomb structure 100. (Hereinafter, these portions are referred to as "end portion 115A" and "end portion 115B", respectively, of the honeycomb structure 100. See also FIG. 2.)

The honeycomb structure 100 is formed of, for example, a material having silicon carbide (SiC) as a principal component, to which a small amount of a resistance adjusting component such as aluminum nitride (AlN) is further added in order to lower resistance. A catalyst is provided on the cell walls 124 of the honeycomb structure 100.

The honeycomb unit forming the honeycomb structure 100 may also be referred to as "electrically conductive honeycomb unit."

The electrodes 160A and 160B are formed of an electrically conductive material such as metal. The method of forming the electrodes 160A and 160B is not limited in particular. The electrodes 160A and 160B may be provided on the end portions 115A and 115B of the honeycomb structure by, for example, metal spraying, sputtering, vapor deposition, or the like.

The honeycomb structure 100 thus configured may be subjected to resistance heating by externally applying voltage between the electrodes 160A and 160B.

Here, as illustrated in detail in FIG. 2, the honeycomb structure 100 according to the present invention further includes low resistance portions 170A and 170B at least directly under the electrodes 160A and 160B, respectively. The low resistance portions 170A and 170B are provided in an exterior wall 120 defining the outer peripheral surface of the honeycomb structure 100 so as to be in contact with the electrodes 160A and 160B in the end portions 115A and 115B, respectively, of the honeycomb structure 100.

The "low resistance portion" may refer to part of the honeycomb unit which part is filled with a substance lower in electrical resistivity than a material forming the honeycomb unit.

The low resistance portions 170A and 170B are lower in resistivity than other regions of the honeycomb structure 100 (except the electrodes 160A and 160B). The low resistance portions 170A and 170B are formed by filling some of the pores present at the surface of the exterior wall 120 of the end portions 115A and 115B of the honeycomb structure 100 with an electrically conductive substance including a metal and/or a silicide, etc. The metal may be silicon (Si), nickel (Ni), etc. The silicide may be, for example, nickel silicide (NiₓSi_{y}), chromium silicide (CrₓSi_{y}), iron silicide (FeₓSi_{y}), etc.

These low resistance portions 170A and 170B serve as regions to ease local concentration of electric energy on the electrode portions at the time of supplying the honeycomb structure 100 with electric current via the electrodes 160A and 160B. That is, the presence of the low resistance portions 170A and 170B directly under the electrodes 160A and 160B prevents local generation of high heat in the electrodes 160A and 160B. Further, this deters degradation or breakage of the electrodes 160A and 160B, thus allowing the honeycomb structure 100 to be used with long-term stability.

The range of filling of the low resistance portions 170A and 170B is not limited in particular as long as the low resistance portions 170A and 170B are in contact with the electrodes 160A and 160B. For example, in the case of FIG. 2, the filling of the low resistance portions 170A and 170B is performed in the region between the outer peripheral surface of the exterior wall 120 of the honeycomb structure 100 (that is, the lowermost surfaces of the electrodes 160A and 160B) and a boundary line BL, and the depth D1 of the filling is preferably 30 µm to 100 µm. However, the value of the depth D1 from the outer peripheral surface of the exterior wall 120 to the boundary line BL may be equal to or more than the thickness of the exterior wall 120 (for example, 300 µm to 400 µm).

Further, in the case of having difficulty in locally performing filling for the low resistance portions 170A and 170B, the filling may be performed throughout the end portions 115A and 115B (that is, including the cell walls 124 of the end portions 115A and 115B) to form the low resistance portions 170A and 170B.

The amount of the electrically conductive substance with which the low resistance portions 170A and 170B are filled (the ratio of the weight of the electrically conductive substance to the total weight of the end portion 115A or 115B) is not limited in particular, but is preferably 1 wt% to 80 wt%, and more preferably, 20 wt% to 55 wt%.

Further, since the low resistance portions 170A and 170B are filled, the porosity of the end portion 115A or 115B (where the low resistance portion 170A or 170B is filled) is preferably 0% to 20%.

As described above, according to the present invention, pores of the outer peripheral wall (exterior wall) of a honeycomb unit are filled with a substance of low electrical resistivity (a low resistance substance) where the outer peripheral wall defines an outer periphery of the honeycomb unit provided with electrodes. The pores of the outer peripheral wall are connected to each other to form a three-dimensional opening structure. Since this opening is filled with the substance of low electrical resistivity (low resistance substance), the three-dimensional structure of the low resistance substance is present in the outer peripheral wall. Therefore, compared with the case where such a low resistance substance is among particles of the outer peripheral wall, the resistance of outer peripheral wall portions where the electrodes are formed is lowered, so that the amount of heat generation of the outer peripheral wall portions where the electrodes are formed is reduced in the case of supplying electric current. Therefore, it is possible to deter degradation of the electrode material.

Further, according to the present invention, in the case where "the honeycomb unit includes an outer peripheral wall defining an outer periphery and interior walls separating the through holes of the honeycomb unit; the electrodes are formed on the outer peripheral surface of the outer peripheral wall; the interior walls are electrically connected to the outer peripheral wall having the electrodes formed thereon, and the pores are filled with the substance lower in electrical resistivity than the material forming the honeycomb unit in the interior walls," the outer peripheral wall and the interior walls are substantially equal in potential in the end portions of the honeycomb unit, so that it is possible to equalize the density of current flowing through the peripheral wall with the density of current flowing through the interior walls. Further, this allows the amount of heat generation to be uniform throughout the honeycomb unit.

### [Second Configuration]

The honeycomb structure 100 illustrated in FIG. 1 is a honeycomb structure formed of a single honeycomb unit, that is, has a so-called "monolithic structure." The present invention, however, may also be applied to a honeycomb structure having a so-called "aggregated structure," which is formed of multiple honeycomb units.

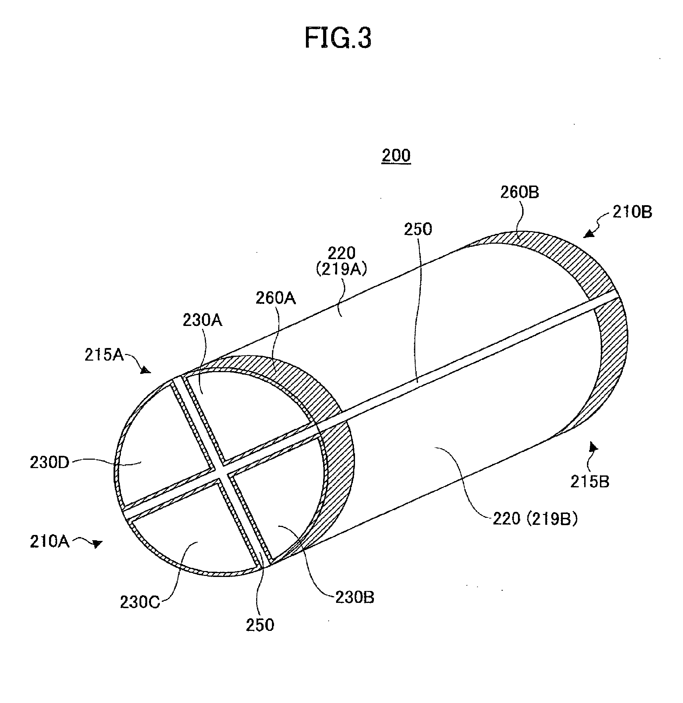

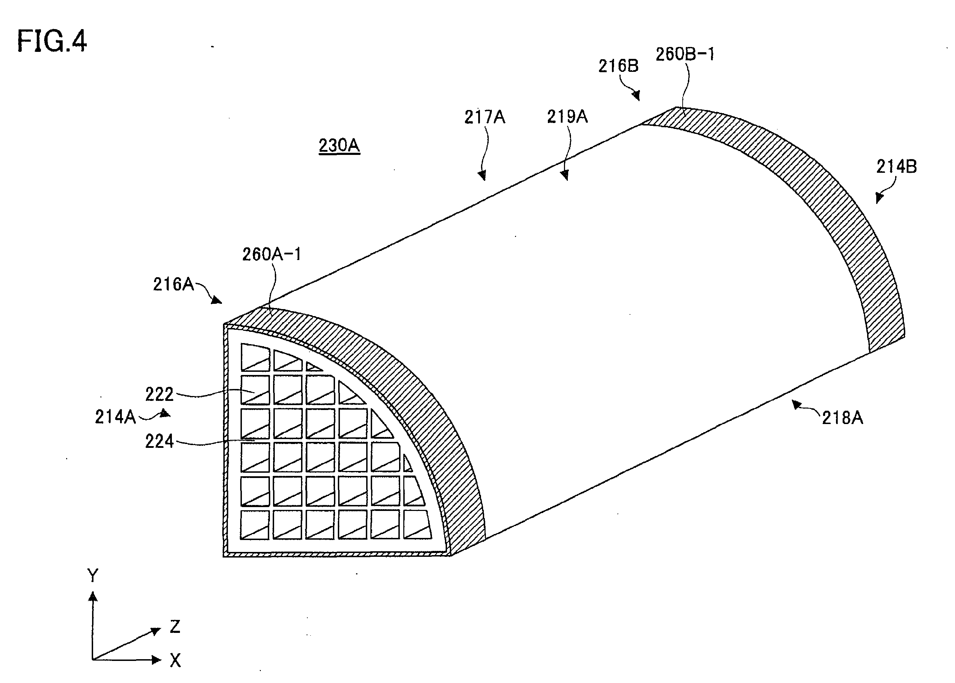

FIG. 3 illustrates a honeycomb structure 200 of "aggregated structure" according to the present invention. Further, FIG. 4 illustrates a typical honeycomb unit of the honeycomb structure 200 illustrated in FIG. 3.

As illustrated in FIG. 3, the honeycomb structure 200 according to the present invention has two open end faces 210A and 210B and a side surface 220.

The honeycomb structure 200 is formed by joining multiple honeycomb units by interposing an adhesive layer 250. For example, in the case illustrated in FIG. 3, the honeycomb structure 200 includes four honeycomb units 230A through 230D. The honeycomb units 230A through 230D are porous bodies.

As illustrated in FIG. 4, the honeycomb unit 230A has a pillar structure having end faces 214A and 214B having a substantially sectorial shape of a quarter circle and three sides 217A, 218A, and 219A. Of these, the side 217A and the side 218A have a substantially flat surface, and the side 219A is a side having a curved surface (hereinafter referred to as "curved side"). In the case of FIG. 3, the honeycomb units 230B through 230D have the same shape as the honeycomb unit 230A. For example, as illustrated in FIG. 3, the honeycomb unit 230B has a curved side 219B corresponding to the curved side 219A of the honeycomb unit 230A.

The honeycomb unit 230A includes multiple cells 222 and cell walls 224 defining the cells 222. The cells 222 extend from the end face 214A to the end face 214B along the longitudinal directions of the honeycomb unit 230A to be open at the end faces 214A and 214B. The honeycomb unit 230A is formed of, for example, a material including silicon carbide (SiC) as a principal component, to which a small amount of a resistance adjusting component such as aluminum nitride (AlN) is added in order to lower resistance. A catalyst is provided on the cell walls 224 of the honeycomb unit 230A.

An electrode 260A-1 and an electrode 260B-1 are provided around portions extending from the end faces 214A and 214B (hereinafter referred to as "end portion 216A" and "end portion 216B"), respectively, of the honeycomb unit 230A. In the case of FIG. 4, the electrodes 260A-1 and 260B-1 are, but do not necessarily have to be, provided entirely around the portions extending from the end faces 214A and 214B (that is, around the entire end portions 216A and 216B), respectively, of the honeycomb unit 230A. The electrodes 260A-1 and 260B-1 are provided on the honeycomb unit 230A at least on the side of its curved side 219A.

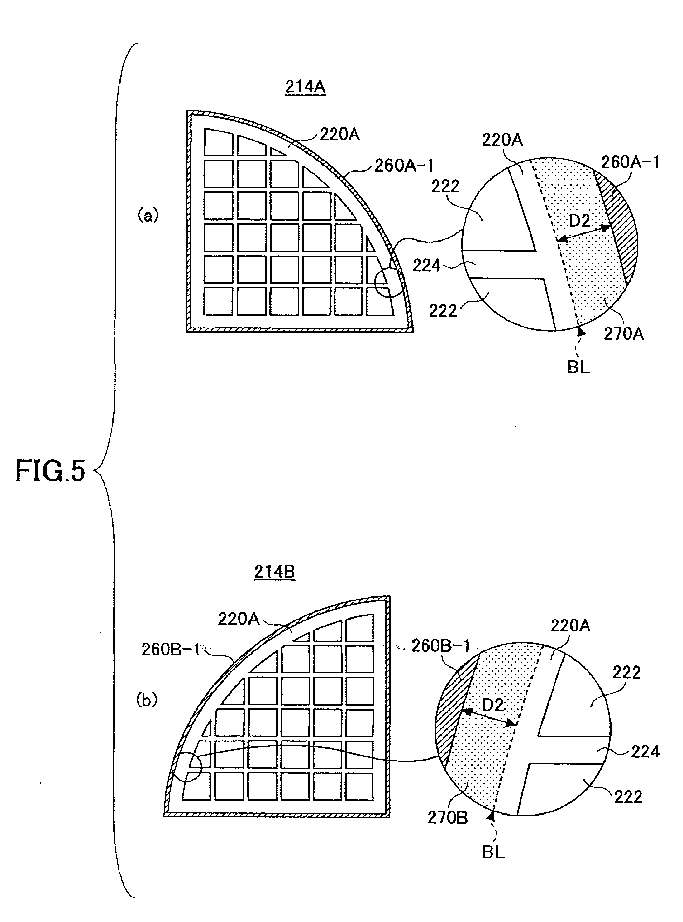

Further, the honeycomb unit 230A has low resistance portions 270A and 270B at least directly under the electrodes 260A-1 and 260B-1, respectively, as illustrated in FIG. 5. For example, when the electrodes 260A-1 and 260B-1 are provided entirely around the end portions 216A and 216B, respectively, of the honeycomb unit 230A as in FIG. 4, the low resistance portions 270A and 270B are also provided peripherally in the entire end portions 216A and 216B, respectively. On the other hand, if the electrodes 260A-1 and 260B-1 are provided only on the side of the curved side 219A of the honeycomb unit 230A, the low resistance portions 270A and 270B are provided only on the side of the curved side 219A of the honeycomb unit 230A.

The low resistance portions 270A and 270B are lower in resistivity than other regions of the honeycomb unit 230A. Further, the low resistance portions 270A and 270B are formed by filling some of the pores present at the surface of an exterior wall 220A of the end portions 216A and 216B of the honeycomb unit 230A with an electrically conductive substance including a metal and/or a silicide, etc.

Further, in FIG. 5, the filling of the low resistance portions 270A and 270B is performed in the region between the surface of the exterior wall 220A of the honeycomb unit 230 (that is, the lowermost surfaces of the electrodes 260A-1 and 260B-1) and a boundary line BL, and the depth D2 of the filling is preferably 30 µm to 100 µm. However, the value of the depth D2 from the surface of the exterior wall 220A to the boundary line BL may be equal to or more than the thickness of the exterior wall 220A (for example, 300 µm to 400 µm).

Further, if it is difficult to cause the low resistance portions 270A and 270B to be present locally, the low resistance portions 270A and 270B may be provided in the entire end portions 216A and 216B.

The content of the electrically conductive substance with which the low resistance portions 270A and 270B are filled (the ratio of the weight of the electrically conductive substance to the total weight of the end portion 216A or 216B) is not limited in particular, but is preferably 1 wt% to 80 wt%, and more preferably, 20 wt% to 55 wt%.

Referring to FIG. 3, when the honeycomb units 230A through 230D are assembled into the honeycomb structure 200, the electrodes 260A-1 and 260B-1 provided on the honeycomb units 230A through 230D are connected (continuous) by interposing the adhesive layer 250 in end portions 215A and 215B of the honeycomb structure 200 to form electrodes 260A and 260B, respectively. Likewise, when the honeycomb structure 200 is assembled, the low resistance portions 270A and 270B provided in the honeycomb units 230A through 230D are connected (continuous) by interposing the adhesive layer in the end portions 215A and 215B, respectively, of the honeycomb structure 200.

It is clear to a person having ordinary skill in the art that the above-described effects according to the present invention are also produced by this honeycomb structure 200.

In the case where a honeycomb structure is formed of multiple honeycomb units, at least one of the honeycomb units may have a feature of the present invention. It is preferable, however, that all of the honeycomb units forming the honeycomb structure have a feature of the present invention.

If all of the honeycomb units forming the honeycomb structure have a feature of the present invention, it is possible to ensure obtaining such effects according to the present invention as described above.

### [Details of Honeycomb Structure]

Next, a description is given in more detail of a configuration of each of members of a honeycomb structure according to the present invention. In the following, a description is given principally of members of the honeycomb structure 200 having the structure illustrated in FIG. 3. However, it is clear to a person having ordinary skill in the art that part of the description may also be applied to the honeycomb structure 100 having the structure illustrated in FIG. 1. Further, in FIG. 3, the honeycomb units 230A through 230D have the same configuration. Accordingly, the honeycomb unit 230A is taken here, and a description is given of its configuration.

### [Honeycomb Unit]

The resistance of the honeycomb unit 230A is preferably 1 Ω to 10³ Ω (except for the low resistance portions 270A and 270B). This allows the honeycomb structure 200 to be sufficiently heated even if the voltage applied across the electrodes 260A-1 and 260B-1 is, for example, approximately a voltage value of a normal battery in hybrid vehicles. If the resistance of the honeycomb unit 230A is less than 1 Ω, a sufficient amount of heat generation cannot be obtained.

For example, in the case where the honeycomb unit 230A is formed of silicon carbide, the resistivity of the honeycomb unit 230A may be adjusted with relative ease by including a slight amount of aluminum nitride (AlN) in the base material.

If the resistance of the honeycomb unit 230A exceeds 10³ Ω, electric current is less likely to flow because the resistance is too high, so that the honeycomb unit 230A does not generate heat.

The above description is given of the honeycomb unit 230A (except the low resistance portions 270A and 270B, or where the electrodes 260A-1 and 260B-1 are not formed.) That is, the honeycomb unit 230A is a part that needs heat generation.

Next, a description is given below of the electrodes 260A-1 and 260B-1 of the honeycomb unit 230A.

It is desired that portions of the honeycomb unit 230A where electrodes are to be formed be free of heat generation in order to prevent degradation of the electrodes. Therefore, low resistance portions are formed in the honeycomb unit 230A.

The resistivity of the low resistance portions 270A and 270B of the honeycomb unit 230A may be any value as long as the low resistance portions 270A and 270B are lower in resistivity than other regions of the honeycomb unit 230A. For example, the resistivity of the low resistance portions 270A and 270B of the honeycomb unit 230A is preferably 10⁻⁵ Ωcm to 10⁻³ Ωcm.

The method of forming the low resistance portions 270A and 270B of the honeycomb unit 230A is not limited in particular. For example, the low resistance portions 270A and 270B may be formed by dipping end portions of the honeycomb unit 230A into melt containing a raw material to later form the low resistance portions 270A and 270B or slurry containing such a raw material.

The honeycomb unit 230A is formed of an inorganic material based on silicon carbide (SiC) or the like.

The cross-sectional shape of the honeycomb unit 230A perpendicular to its longitudinal directions is not limited in particular, and may be any shape such as a substantially square shape, a substantially rectangular shape, a substantially hexagonal shape, etc.

Further, the cross-sectional shape of the cells 222 of the honeycomb unit 230A perpendicular to its longitudinal directions is not limited in particular, and may be, for example, a substantially triangular shape, a substantially polygonal shape, etc., in addition to a substantially square shape.

The cell density of the honeycomb unit 230A is preferably 15.5 cells/cm² to 186 cells/cm² (100 cpsi to 1200 cpsi), more preferably 46.5 cells/cm² to 170 cells/cm² (300 cpsi to 1100 cpsi), and still more preferably 62 cells/cm² to 155 cells/cm² (400 cpsi to 1000 cpsi).

The porosity of the honeycomb unit 230A is preferably 35% to 70%. However, the porosity is lower in the end portions 216A and 216B of the honeycomb unit 230A because of the presence of the electrically conductive substance in some pores. Therefore, the porosity in the end portions 216A and 216B of the honeycomb unit 230A is preferably 0% to 20%.

The thickness of the cell walls 224 of the honeycomb unit 230A is not limited in particular. However, a desirable lower limit is preferably 0.1 mm in terms of the strength of the honeycomb unit, and a desirable upper limit is preferably 0.4 mm in terms of the conversion performance of the honeycomb structure.

The catalyst supported on the cell walls 224 of the honeycomb unit 230A is not limited in particular, and, for example, platinum, rhodium, palladium, etc., may be used. The catalyst may be supported on the cell walls 224 by interposing an aluminum layer.

### [Adhesive Layer]

The adhesive layer 250 of the honeycomb structure 200 is formed using adhesive layer paste as its raw material. The adhesive layer paste may contain inorganic particles, an inorganic binder, inorganic fibers, and/or an organic binder.

Silicon carbide (SiC) is desirable as inorganic particles of the adhesive layer paste. Inorganic sol, a clay-based binder, etc., may be used as the inorganic binder. Examples of the inorganic sol include alumina sol, silica sol, titania sol, water glass and the like. Examples of the clay-based binder include clay, kaolin, montmonrillonite, sepiolite, attapulgite, and the like. These may be used alone or in combination.

Of these, alumina sol, silica sol, titania sol, water glass, sepiolite, or attapulgite is desirable.

Alumina, silica, silicon carbide, silica-alumina, glass, potassium titanate, aluminum borate or the like is desirable as the material of the inorganic fibers. These may be used alone or in combination. Of the above-described materials, silica-alumina is desirable.

The organic binder is not limited in particular, and is, for example, one or more selected from polyvinyl alcohol, methylcellulose, ethylcellulose, carboxymethylcellulose, etc. Of the organic binders, carboxymethylcellulose is desirable.

The thickness of the adhesive layer 250 is preferably 0.3 mm to 2 mm. This is because if the thickness of the adhesive layer 250 is"less than 0.3 mm, sufficient joining strength of the honeycomb units is not obtained. If the thickness of the adhesive layer 250 exceeds 2 mm, the pressure loss of the honeycomb structure increases. The number of honeycomb units to be joined is suitably selected in accordance with the size of the honeycomb structure.

### [Honeycomb Structure]

A honeycomb structure according to the present invention may have any shape. For example, in addition to a substantial circular-pillar shape illustrated in FIG. 1 and FIG. 3, the honeycomb structure may also have a substantial cylindroid shape, a substantial square pillar shape, a substantial polygonal pillar shape, etc.

In the cases illustrated in FIG. 1 and FIG. 3, the electrodes 160A and 160B and the electrodes 260A and 260B are provided on the end portions 115A and 115B of the honeycomb structure 100 and the end portions 216A and 216B of the honeycomb structure 200, respectively. However, the positions where electrodes are provided are not limited to these, and the electrodes may be provided at any locations on the outer peripheral surface of the honeycomb structure.

### [Method of Manufacturing Honeycomb Structure]

Next, a description is given briefly of a method of manufacturing a honeycomb structure according to the present invention.

### [Manufacture of Honeycomb Unit]

First, honeycomb unit molded bodies are made by extrusion molding or the like using raw material paste having inorganic particles including silicon carbide (SiC) and an inorganic binder as principal components, and further having inorganic fibers added as required. A suitable amount of aluminum nitride (AlN) or the like may be further added to the raw material paste in order to adjust the resistivity of the honeycomb unit.

In addition to these, an organic binder, a dispersion medium, and a molding aid may be suitably added to the raw material paste in accordance with moldability. The organic binder is not limited in particular. The organic binder includes one or more organic binders selected from, for example, methylcellulose, carboxymethylcellulose, hydroxyethylcellulose, polyethylene glycol, phenolic resin, epoxy resin, etc. The amount of the organic binder blended is preferably 1 to 10 parts by weight to the total of 100 parts by weight of the inorganic particles, inorganic binder, and inorganic fibers.

The dispersion medium is not limited in particular, and may be, for example, water, an organic solvent (such as benzene), alcohol (such as methanol), etc. The molding aid is not limited in particular, and may be, for example, ethylene glycol, dextrin, a fatty acid, fatty acid soap, polyalcohol, etc.

The raw material paste is not limited in particular, and is preferably subjected to mixing and kneading. For example, the raw material paste may be mixed using a mixer, attritor or the like, and may be well kneaded with a kneader or the like. The method of molding the raw material paste is not limited in particular. It is preferable, for example, to form the raw material paste into a shape having cells by extrusion molding or the like.

Next, it is preferable to dry the obtained molded bodies. The drying apparatus used for drying is not limited in particular, and may be a microwave drying apparatus, a hot air drying apparatus, a dielectric drying apparatus, a reduced-pressure drying apparatus, a vacuum drying apparatus, a freeze drying apparatus, etc. Further, it is preferable to degrease the obtained dried molded bodies. The conditions for degreasing, which are not limited in particular and are suitably selected in accordance with the kind and amount of the organic matter included in the molded bodies, are preferably approximately 400 °C and two hours. Further, it is preferable to subject the obtained molded bodies to firing. The condition for firing, which is not limited in particular, is preferably approximately 2700 °C.

### [Formation of Low Resistance Portions]

Next, low resistance portions are formed one on each end portion of each honeycomb unit. As described above, the low resistance portions may be formed by dipping the honeycomb unit into melt containing a raw material to later form the low resistance portions or slurry containing such a raw material. The honeycomb unit after dipping is subjected to heat treatment, so that an electrically conductive substance such as metal and/or a silicide compound, is fixed in pores of the honeycomb unit.

For example, in the case of selecting silicon as an electrically conductive substance to fill in the low resistance portions, slurry containing silicon particles, an organic binder, and water is prepared. Further, after dipping the end portions of the honeycomb unit into this slurry, the honeycomb unit is subjected to heat treatment at 1500 °C for one hour in an Ar atmosphere. Thereby, pores of the honeycomb unit are filled with silicon throughout the end portions of the honeycomb unit, so that the low resistance portions may be formed.

Further, in the case of selecting nickel silicide as an electrically conductive substance to fill in the low resistance portions, slurry containing silicon particles, nickel particles, an organic binder, and water is prepared. Next, after dipping the end portions of the honeycomb unit into this slurry, the honeycomb unit is subjected to heat treatment at 900 °C for one hour in a nitrogen atmosphere. Thereby, the pores of the honeycomb unit are filled with nickel silicide throughout the end portions of the honeycomb unit, so that the low resistance portions may be formed.

### [Assembly of Honeycomb Structure]

Thereafter, a catalyst is supported on the cell walls of each honeycomb unit.

Next, adhesive layer paste to later become an adhesive layer is applied on a side of a honeycomb unit obtained in the above-described process to be uniform in thickness, and thereafter, another honeycomb unit is successively stacked on the honeycomb unit by interposing this adhesive layer paste. This process is repeated so that a honeycomb structure of a desired size is manufactured.

Next, this honeycomb structure is heated to dry and solidify the adhesive layer paste, thereby forming an adhesive layer and fixing the honeycomb units to each other.

It is preferable to degrease this honeycomb structure after joining the multiple honeycomb units with the adhesive layer. As a result of this treatment, if an organic binder is included in the adhesive layer paste, this organic binder can be removed by degreasing. The conditions for degreasing, which are suitably determined in accordance with the kind and amount of the included organic material, are preferably approximately 700 °C and two hours.

Next, annular electrode terminals are provided, one at each end portion of the honeycomb structure, so as to be in contact with the low resistance portions of the honeycomb units.

A honeycomb structure may be manufactured by the above-described process.

## Claims

1. A honeycomb structure (100) including at least one honeycomb unit having a plurality of through holes (122) provided in parallel in a longitudinal direction and separated by a cell wall (124), wherein:
the at least one honeycomb unit includes a pair of electrodes (160A, 160B), **characterized in that**:
the cell wall has pores filled with a substance directly under a formation region of the electrodes, the substance having an electrical resistivity lower than an electrical resistivity of a material forming the at least one honeycomb unit.

2. The honeycomb structure as claimed in claim 1, **characterized in that** the substance having the lower electrical resistivity includes at least one of a metal and a silicide.

3. The honeycomb structure as claimed in claim 2, **characterized in that** the metal is silicon.

4. The honeycomb structure as claimed in claim 2, **characterized in that** the silicide is nickel silicide.

5. The honeycomb structure as claimed in any of claims 1 to 4, **characterized in that** the electrodes are formed to surround peripheries of cross sections perpendicular to the longitudinal direction of the at least one honeycomb unit.

6. The honeycomb structure as claimed in any of claims 1 to 5, **characterized in that**:
the at least one honeycomb unit includes an outer peripheral wall defining an outer periphery of the at least one honeycomb unit and an interior wall separating the through holes of the at least one honeycomb unit,
the electrodes are formed on the outer peripheral surface of the outer peripheral wall,
the interior wall is electrically connected to the outer peripheral wall having the electrodes formed thereon, and
the pores in the interior wall are filled with the substance having the lower electrical resistivity forming the at least one honeycomb unit.

7. The honeycomb structure as claimed in claim 6, **characterized in that** a region where at least one of the outer peripheral wall and the interior wall of the at least one honeycomb unit filled with the substance having the lower electrical resistivity forming the at least one honeycomb unit is wider than the electrodes in the longitudinal direction.

8. The honeycomb structure as claimed in any of claims 1 to 7, **characterized in that** a resistance between the pair of electrodes is 1 Ω to 10³ Ω in the at least one honeycomb unit.

9. The honeycomb structure as claimed in any of claims 1 to 8, **characterized in that** the honeycomb structure (200) is formed of the multiple honeycomb units (230) bonded by interposing an adhesive layer (250).

10. The honeycomb structure as claimed in any of claims 1 to 9, **characterized in that** the electrodes are formed by one of spraying and sputtering.

11. The honeycomb structure as claimed in any of claims 1 to 10, **characterized in that** a catalyst is supported on the cell wall of the at least one honeycomb unit.

12. The honeycomb structure as claimed in claim 11, **characterized in that** the catalyst is one of platinum, rhodium, and palladium, and is supported on the cell wall by interposing an aluminum layer.

13. The honeycomb structure as claimed in any of claims 1 to 12, **characterized in that** the at least one honeycomb unit includes silicon carbide as a principal component.

## Patentansprüche

1. Wabenstruktur (100) mit wenigstens einer Wabeneinheit, die mehrere Durchgangslöcher (122) aufweist, die parallel in einer Längsrichtung und durch eine Zellwand (124) getrennt vorgesehen sind, wobei:
die wenigstens eine Wabeneinheit ein Paar Elektroden (160A, 160B) aufweist, **dadurch gekennzeichnet, dass**:
die Zellwand Poren aufweist, die direkt unterhalb eines Ausbildungsbereichs der Elektroden mit einer Substanz gefüllt sind, wobei die Substanz einen spezifischen elektrischen Widerstand aufweist, der geringer ist als ein spezifischer elektrischer Widerstand eines Materials, welches die wenigstens eine Wabeneinheit ausbildet.

2. Wabenstruktur nach Anspruch 1, **dadurch gekennzeichnet, dass** die Substanz mit dem geringeren elektrischen Widerstand ein Metall und/oder ein Silizid aufweist.

3. Wabenstruktur nach Anspruch 2, **dadurch gekennzeichnet, dass** das Metall Silizium ist.

4. Wabenstruktur nach Anspruch 2, **dadurch gekennzeichnet, dass** das Silizid Nickelsilizid ist.

5. Wabenstruktur nach einem der Ansprüche 1 bis 4,
**dadurch gekennzeichnet, dass** die Elektroden so ausgebildet sind, dass sie die Umfänge der Querschnitte senkrecht zu der Längsrichtung der wenigstens einen Wabeneinheit umgeben.

6. Wabenstruktur nach einem der Ansprüche 1 bis 5,
**dadurch gekennzeichnet, dass**:
die wenigstens eine Wabeneinheit eine äußere Umfangswand, die einen äußeren Umfang der wenigstens einen Wabeneinheit definiert, und eine Innenwand aufweist, welche die Durchgangslöcher der wenigstens einen Wabeneinheit trennt,
die Elektroden auf der äußeren Umfangsoberfläche der äußeren Umfangswand ausgebildet sind,
die Innenwand elektrisch mit der äußeren Umfangswand verbunden ist, welche die Elektroden darauf ausgebildet hat, und
die Poren in der Innenwand mit der Substanz angefüllt sind, welche den geringeren spezifischen elektrischen Widerstand hat, welche die wenigstens eine Wabeneinheit ausbildet.

7. Wabenstruktur nach Anspruch 6, **dadurch gekennzeichnet, dass** ein Bereich, in dem die äußere Umfangswand und/oder die innere Wand der wenigstens einen Wabeneinheit mit der Substanz mit dem geringeren elektrischen Widerstand angefüllt ist, welche die wenigstens eine Wabeneinheit ausbildet, breiter ist als die Elektroden der Längsrichtung.

8. Wabenstruktur nach einem der Ansprüche 1 bis 7,
**dadurch gekennzeichnet, dass** ein Widerstand zwischen dem Paar an Elektroden zwischen 1Ω bis 10³Ω in der wenigstens einen Wabeneinheit ist.

9. Wabenstruktur nach einem der Ansprüche 1 bis 8,
**dadurch gekennzeichnet, dass** die Wabenstruktur (200) aus mehreren Wabeneinheiten (230) ausgebildet ist, die durch Einfügen einer Klebeschicht (150) verbunden sind.

10. Wabenstruktur nach einem der Ansprüche 1 bis 9,
**dadurch gekennzeichnet, dass** die Elektroden durch Aufsprühen und/oder Sputtern ausgebildet sind.

11. Wabenstruktur nach einem der Ansprüche 1 bis 10,
**dadurch gekennzeichnet, dass** ein Katalysator auf der Zellwand der wenigstens einen Wabeneinheit gelagert wird.

12. Wabenstruktur nach Anspruch 11, **dadurch gekennzeichnet, dass** der Katalysator Platin, Rhodium oder Palladium ist und er auf der Zellwand durch Einfügen einer Aluminiumschicht gelagert wird.

13. Wabenstruktur nach einem der Ansprüche 1 bis 12,
**dadurch gekennzeichnet, dass** die wenigstens eine Wabeneinheit Siliziumcarbid als eine Hauptkomponente aufweist.

## Revendications

1. Structure en nid d'abeilles (100) comportant au moins une unité en nid d'abeilles comprenant une pluralité de trous débouchants (122) prédisposés en parallèle dans une direction longitudinale et séparés par une paroi cellulaire (124), où :
l'au moins une unité en nid d'abeilles comporte une paire d'électrodes (160A, 160B), **caractérisée en ce que** :
la paroi cellulaire comprend des pores remplis par une substance directement sous une région de formation des électrodes, la substance présentant une résistivité électrique inférieure à la résistivité électrique d'un matériau formant l'au moins une unité en nid d'abeilles.

2. Structure en nid d'abeilles telle que revendiquée dans la revendication 1, **caractérisée en ce que** la substance ayant la plus faible résistivité électrique comporte un métal et/ou un siliciure.

3. Structure en nid d'abeilles telle que revendiquée dans la revendication 2, **caractérisée en ce que** le métal est le silicium.

4. Structure en nid d'abeilles telle que revendiquée dans la revendication 2, **caractérisée en ce que** le siliciure est le siliciure de nickel.

5. Structure en nid d'abeilles telle que revendiquée dans l'une des revendications 1 à 4, **caractérisée en ce que** les électrodes sont formées de sorte à entourer les périphéries de sections transversales perpendiculaires à la direction longitudinale de l'au moins une unité en nid d'abeilles.

6. Structure en nid d'abeilles telle que revendiquée dans l'une des revendications 1 à 5, **caractérisée en ce que**:
l'au moins une unité en nid d'abeilles comporte une paroi périphérique extérieure définissant une périphérie extérieure de l'au moins une unité en nid d'abeilles et une paroi intérieure séparant les trous débouchants de l'au moins une unité en nid d'abeilles,
les électrodes sont formées sur la surface périphérique extérieure de la paroi périphérique extérieure,
la paroi intérieure est reliée électriquement à la paroi périphérique extérieure sur laquelle les électrodes sont formées, et
les pores dans la paroi intérieure sont remplis par la substance ayant la plus faible résistivité électrique formant l'au moins une unité en nid d'abeilles.

7. Structure en nid d'abeilles telle que revendiquée dans la revendication 6, **caractérisée en ce qu'**une région où au moins l'une de la paroi périphérique extérieure et de la paroi intérieure de l'au moins une unité en nid d'abeilles remplie par la substance ayant la plus faible résistivité électrique formant l'au moins une unité en nid d'abeilles est plus large que les électrodes dans la direction longitudinale.

8. Structure en nid d'abeilles telle que revendiquée dans l'une des revendications 1 à 7, **caractérisée en ce qu'**une résistance entre la paire d'électrodes est de 1 Ω à 10³ Ω dans l'au moins une unité en nid d'abeilles.

9. Structure en nid d'abeilles telle que revendiquée dans l'une des revendications 1 à 8, **caractérisée en ce que** la structure en nid d'abeilles (200) est formée de la pluralité d'unités en nid d'abeilles (230) collées en interposant une couche adhésive (250).

10. Structure en nid d'abeilles telle que revendiquée dans l'une des revendications 1 à 9, **caractérisée en ce que** les électrodes sont formées soit par pulvérisation soit par pulvérisation cathodique.

11. Structure en nid d'abeilles telle que revendiquée dans l'une des revendications 1 à 10, **caractérisée en ce qu'**un catalyseur est supporté sur la paroi cellulaire de l'au moins une unité en nid d'abeilles.

12. Structure en nid d'abeilles telle que revendiquée dans la revendication 11, **caractérisée en ce que** le catalyseur est l'un du platine, du rhodium, et du palladium, et est supporté sur la paroi cellulaire en interposant une couche d'aluminium.

13. Structure en nid d'abeilles telle que revendiquée dans l'une des revendications 1 à 12, **caractérisée en ce que** l'au moins une unité en nid d'abeilles comporte du carbure de silicium en tant que composant principal.
